(19) **Europäisches Patentamt**
**European Patent Office**
**Office européen des brevets**

(11) **EP 2 133 198 B1**

(12) **EUROPEAN PATENT SPECIFICATION**

(45) Date of publication and mention
of the grant of the patent:
**04.11.2020 Bulletin 2020/45**

(21) Application number: **08720842.7**

(22) Date of filing: **26.02.2008**

(51) Int Cl.:
*B32B 7/02* *(2019.01)*          *B01D 39/20* *(2006.01)*
*C04B 37/00* *(2006.01)*         *C09J 1/00* *(2006.01)*
*C09J 11/04* *(2006.01)*         *F01N 3/02* *(2006.01)*
*B32B 3/12* *(2006.01)*          *B32B 7/12* *(2006.01)*

(86) International application number:
**PCT/JP2008/053251**

(87) International publication number:
**WO 2008/126485 (23.10.2008 Gazette 2008/43)**

(54) **HONEYCOMB STRUCTURE, METHOD FOR PRODUCTION OF THE HONEYCOMB STRUCTURE, BONDING MATERIAL, AND METHOD FOR PRODUCTION OF THE BONDING MATERIAL**

WABENSTRUKTUR, VERFAHREN ZUR HERSTELLUNG DER WABENSTRUKTUR, VERBINDUNGSZUSAMMENSETZUNG UND VERFAHREN ZUR HERSTELLUNG DER VERBINDUNGSZUSAMMENSETZUNG

STRUCTURE D'ALVEOLE, PROCÉDÉ DE PRODUCTION DE LA STRUCTURE D'ALVEOLE, COMPOSITION D'ASSEMBLAGE ET PROCÉDÉ POUR LA PRODUCTION DE LA COMPOSITION D'ASSEMBLAGE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **27.03.2007 JP 2007081957**

(43) Date of publication of application:
**16.12.2009 Bulletin 2009/51**

(73) Proprietor: **NGK Insulators, Ltd.**
**Nagoya-shi, Aichi 467-8530 (JP)**

(72) Inventors:
• **KAWAI, Masaaki**
  **Nagoya-shi**
  **Aichi 467-8530 (JP)**
• **TOMITA, Takahiro**
  **Nagoya-shi**
  **Aichi 467-8530 (JP)**

• **MORIMOTO, Kenji**
  **Nagoya-shi**
  **Aichi 467-8530 (JP)**
• **KAWASAKI, Shinji**
  **Nagoya-shi**
  **Aichi 467-8530 (JP)**

(74) Representative: **Teipel, Stephan et al**
**Lederer & Keller**
**Patentanwälte Partnerschaft mbB**
**Unsöldstrasse 2**
**80538 München (DE)**

(56) References cited:
**EP-A1- 0 624 462          EP-A2- 0 880 184**
**JP-A- 6 024 867           JP-A- 60 161 713**
**JP-A- 2002 177 719        JP-A- 2002 177 719**
**JP-A- 2005 251 500        JP-A- 2005 264 135**
**JP-A- 2006 289 627        US-A- 3 106 503**
**US-A- 4 973 506           US-A- 5 382 558**

**Description**

Technical Field

The present invention relates to a honeycomb structure obtained by unitarily bonding a plurality of honeycomb segments, a method for manufacturing the honeycomb structure, a bonding material composition for obtaining the honeycomb structure, and a method for manufacturing the bonding material composition.

Background Art

A honeycomb structure is widely used as a trapping filter for exhaust gas, for example, a diesel particulate filter (DPF) for trapping and removing particulate matter (particulates) contained in exhaust gas from a diesel engine or the like.
Such a honeycomb structure has a structure where a plurality of cells separated and formed by porous partition walls of, for example, silicon carbide (SiC) and functioning as fluid passages are disposed in parallel with one another in the central axial direction. In addition, end portions of adjacent cells are alternately plugged (in a checkerwise pattern). That is, one cell has an open end portion on one side and a plugged end portion on the other side, and the other cells adjacent to the one cell has a plugged end portion on one side and an open end portion on the other side.
Such a structure enables exhaust gas to be purified by allowing exhaust gas flowing into predetermined cells (inflow cells) from end portions on one side to pass through the porous partition walls and flow out via the cells (outflow cells) adjacent to the inflow cells to trap the particulate matter (particulates) in exhaust gas when the exhaust gas passes through the partition walls.
In order to continuously use such a honeycomb structure (filter) for a long period of time, it is necessary to subject a filter to a regeneration treatment unitarily. That is, in order to restore the filter performance in the initial state by reducing the pressure loss increased by particulate matter deposited inside the filter with the passage of time, it is necessary to combust and remove the particulate matter deposited inside the filter. Upon the filter regeneration, large thermal stress is generated, and there raises a problem of causing a defect such as a crack and a breakage in the honeycomb structure due to the thermal stress. To respond to a request for improvement in thermal shock resistance against the thermal stress, there was proposed a honeycomb structure having a divided structure obtained by unitarily bonding a plurality of honeycomb segments by a bonding material layer to impart a function of dispersing and lightening the thermal stress, and the thermal shock resistance could be improved to some extent.
However, in recent years, a further request for increasing the size of a filter increases, and thermal stress generating upon regeneration also increases in accordance with this. Therefore, in order to solve the aforementioned problem, further improvement of thermal shock resistance as a structure is strongly desired. In order to realize the improvement in thermal shock resistance, the excellent stress relaxation function and bonding strength are demanded in the bonding material layer for unitarily bonding a plurality of honeycomb segments.
Conventionally, for the purpose of improving thermal shock resistance by such improvement in the bonding material layer, there has been disclosed a ceramic structure obtained by unitarily bonding a plurality of honeycomb segments by the use of a sealing agent containing at least inorganic fibers, an organic binder, an inorganic binder, and inorganic particles with the degree of orientation of the inorganic fibers being 70% or more (see Patent Document 1) .
The ceramic structure described in the Patent Document 1 is said to be able to release the thermal stress applied to the filter even under severe use conditions because an effect in suppressing expansion and contraction with respect to the longitudinal direction of the filter (ceramic structure) is obtained by using the sealing agent (bonding material composition) as described above. However, in the case that the bonding material composition contains oriented inorganic fibers as described above, since the tensile Young's modulus rises though the compression Young's modulus in the thickness direction of the bonding material layer falls, high thermal stress is generated. In addition, in the case of bonding target articles to be bonded by orienting fibers in one direction in the bonding material composition, contraction of the bonding material composition upon drying or upon a thermal treatment is different between the orientation direction of the fibers and the direction perpendicular to the orientation direction to easily generate a defect such as a crack and a void.
Further, since it is necessary to control the properties of the sealing agent disclosed in the Patent Document 1 by the diameter or the length of the fibers serving as a filler, there is a problem of high cost. Further, since the sealing agent employs fibers as a filler, it is not harmless to a human body.
Patent document 2 describes a thermoelectric conversion module, comprising electrically insulating filler members provided in spaces between semi-conductor elements and inner walls of the through holes formed in a honeycomb structural body and made of an inorganic adhesive of alkali metal silicate or sol-gel glasses. The fill member is dried and solidified at about 200°C.
Patent document 3 discloses a composite sandwich panel having a fire barrier membrane, which may comprise a layer of inorganic paper or a layer of vermiculite film. The inorganic paper may comprise micar or vermiculite micar.

Patent document 4 discloses a honeycomb structure being bonded between a sheet stock and a coating by a cementitious material, which may comprise silicate.

Patent document 5 discloses a filter produced by laminating inorganic fiber paper and corrugated process paper, wherein the paper may comprise ceramic fibers bonded by a silicate gel.

Patent document 6 discloses a porous body formed from a crystalline stratiform silicate.

Patent Document 1: JP-A-2002-177719

Patent Document 2: EP-A-0880184

Patent Document 3: EP-A-0624462

Patent Document 4: US-3,106,503

Patent Document 5: JP-60161713

Patent Document 6: JP-06024867

Disclosure of the Invention

The present invention has been made in view of the aforementioned problems of prior art and mainly aims to provide a honeycomb structure capable of lightening thermal stress generating in the bonded article and capable of reducing generation of a defect such as a crack and a void upon drying or upon a thermal treatment without using fibers which are high cost and not harmless to a human body in the bonding material layer.

In order to achieve the aforementioned aim, according to the present invention, there are provided the honeycomb structure according to claim 1, the bonding material composition according to claim 8, the method for manufacturing the bonding material composition according to claim 11 and the method for manufacturing the honeycomb structure according to claim 13. Preferred embodiments are covered by the dependent claims.

The honeycomb structure according to the invention is obtained by unitarily bonding two or more honeycomb segments to be bonded by means of a bonding material layer, wherein the bonding material layer contains dehydroxylated layer silicate, and the average linear thermal expansion coefficient $\alpha_{1000°C}$ specified by the following formula (1) and the average linear thermal expansion coefficient $\alpha_{400°C}$ specified by the following formula (2) of a test piece cut out from the bonding material layer satisfy the following formula (3):

$$\alpha_{1000°C} = (l_{1000°C} - l_{40°C}) / \{l_{40°C} \times (1273.15K - 313.15K)\} \quad (1)$$

(where, $l_{1000°C}$ represents length of the test piece at 1000°C, and $l_{40°C}$ represents length of the test piece at 40°C)

$$\alpha_{400°C} = (l_{400°C} - l_{40°C}) / \{l_{40°C} \times (673.15K - 313.15K)\} \quad (2)$$

(where, $l_{400°C}$ represents length of the test piece at 400°C, and $l_{40°C}$ represents length of the test piece at 40°C)

$$|\alpha_{1000°C} - \alpha_{400°C}| \leq 2.0 \times 10^{-6}/K \quad (3).$$

bonding material composition of the invention is used for forming a bonding material layer upon manufacturing honeycomb structure obtained by unitarily bonding two or more honeycomb segments to be bonded by means of a bonding material layer, wherein the bonding material composition contains dehydroxylated layer silicate, and the average linear thermal expansion coefficient $\alpha_{1000°C}$ specified by the following formula (5) and the average linear thermal expansion coefficient $\alpha_{400°C}$ specified by the following formula (6) of a test piece cut out from the bonding material composition after being dried and hardened satisfy the following formula (7):

$$\alpha_{1000°C} = (l_{1000°C} - l_{40°C}) / \{l_{40°C} \times (1273.15K - 313.15K)\} \quad (5)$$

(where, $l_{1000°C}$ represents length of the test piece at 1000°C, and $l_{40°C}$ represents length of the test piece at 40°C)

$$\alpha_{400°C} = (l_{400°C} - l_{40°C}) / \{l_{40°C} \times (673.15K - 313.15K)\} \quad (6)$$

(where, $l_{400°C}$ represents length of the test piece at 400°C, and $l_{40°C}$ represents length of the test piece at 40°C)

$$|\alpha_{1000^{\circ}C} - \alpha_{400^{\circ}C}| \leq 2.0 \times 10^{-6}/K \quad (7).$$

[10] A bonding material composition according to [9], wherein the layer silicate is layer silicate of any one or more kinds selected from the group consisting of kaolinite, talc, pyrophyllite, and mica.

[11] A bonding material composition according to [9], wherein the layer silicate is muscovite.

The method for manufacturing the bonding material composition of the invention comprises mixing a raw material containing a filler containing dehydroxylated layer silicate and an inorganic adhesive as main components and kneading to obtain paste. The for manufacturing a honeycomb structure according to the invention comprises unitarily bonding two or more honeycomb segments to be bonded by the use of a bonding material composition according to the invention.

Since a honeycomb structure of the present invention does not use fibers which are high cost and not harmless to a human body in a bonding material layer, the bonded article can be provided at low costs, and there is no possibility of causing a health problem. In addition, since layer silicate, which is plate- shaped (layered), is used in place of fibers as a filler, it is possible to decrease the tensile Young's modulus and the compression Young's modulus in the thickness direction of the bonding material layer, and thermal stress generated in the bonded article can be relaxed. Further, by the use of layer silicate having a high aspect ratio in place of fibers, orientation of contraction upon drying or upon a thermal treatment is relaxed to obtain a uniform contraction over the whole bonding material composition and reduce generation of a defect such as a crack or a void.

Likewise, since a bonding material composition of the present invention does not use fibers which are high cost and not harmless to a human body, the bonding material composition can be provided at low costs, and there is no possibility of causing a health problem. In addition, since layer silicate, which is plate- shaped (layered), is used in place of fibers as a filler, it is possible to decrease the compression Young's modulus and the tensile Young's modulus in the thickness direction of the bonding material layer, and thermal stress generated in the bonded article can be relaxed. Further, by the use of layer silicate having a high aspect ratio in place of fibers, orientation of contraction upon drying or upon a thermal treatment is relaxed to obtain a uniform contraction over the whole bonding material composition and reduce generation of a defect such as a crack or a void.

According to a method for manufacturing a bonding material composition of the present invention, a bonding material composition having excellent effects as described above can be manufactured. According to a method for manufacturing a honeycomb structure of the present invention, a honeycomb structure having excellent thermal shock resistance can be manufactured.

Brief Description of the Drawings

[Fig. 1] Fig. 1 is a perspective schematic view showing an example of an embodiment of a bonded article (a honeycomb structure) of the present invention.
[Fig. 2] Fig. 2 is an enlarged view of a main part, showing an example of an embodiment of a bonded article (a honeycomb structure) of the present invention.
[Fig. 3] Fig. 3 is a perspective schematic view of a target article to be bonded (a honeycomb segment) constituting a bonded article (a honeycomb structure) of the present invention.
[Fig. 4] Fig. 4 is a cross-sectional view along the A-A line in Fig. 3.
[Fig. 5] Fig. 5 is an FT-IR spectrum curve for explaining a method for calculating a peak height.

Description of Reference Numerals

1: honeycomb structure, 2: honeycomb segment, 4: coating material, 5: cell, 6: partition wall, 7: filler, 9: bonding material layer, s: objective peak, b: base line

Best Mode for Carrying out the Invention

Hereinbelow, the present invention will be described on the basis of a specific embodiment. However, the present invention should not be construed with being limited to the embodiment, and various changes, modifications, and improvements may be added on the basis of knowledge of a person of ordinary skill as long as they do not deviate from the scope of the present invention.

A honeycomb structure of the present invention is obtained by unitarily bonding two or more honeycomb segments to be bonded by means of a bonding material layer, and one of the important characteristics is that the bonding material layer contains dehydroxylated layer silicate in place of inorganic fibers which have conventionally been used as a filler of the bonding material layer.

First, when a bonding material composition of the present invention is viewed from the functional perspective, by employing dehydroxylated layer silicate in place of fibers, the bending Young's modulus in the junction bending test of the bonded article can be reduced. This shows that the tensile Young's modulus in the thickness direction of the bonding material layer is low. As a result, the thermal stress generated in the bonded article can be relaxed. Further, when dehydroxylated layer silicate having a high aspect ratio is used in place of fibers oriented in one direction, orientation of contraction upon drying or upon a thermal treatment is relaxed, the whole bonding material composition can uniformly be contracted to reduce generation of a defect such as a crack and a void.

Next, when a honeycomb structure of the present invention is viewed from the cost perspective, in a bonding material layer using fibers, it is necessary to control a diameter and length of fibers in order to control the properties, and such the control needs cost; while, in the case of using dehydroxylated layer silicate, a bonded article can be provided at low cost because such costly control is not required. Further, even in the case viewed from the safety to a human body perspective, fibers are not always harmless when they are taken into a body by aspiration or the like, while there is little possibility of causing a health problem in the case of the layer silicate.

In a honeycomb structure of the present invention, it is required that the average linear thermal expansion coefficient $\alpha_{1000°C}$ specified by the following formula (1) and the average linear thermal expansion coefficient $\alpha_{400°C}$ specified by the following formula (2) of a test piece cut out from the bonding material layer satisfy the following formula (3):

$$\alpha_{1000°C} = (l_{1000°C} - l_{40°C}) / \{l_{40°C} \times (1273.15K - 313.15K)\} \quad (1)$$

(where, $l_{1000°C}$ represents length of the test piece at 1000°C, and $l_{40°C}$ represents length of the test piece at 40°C)

$$\alpha_{400°C} = (l_{400°C} - l_{40°C}) / \{l_{40°C} \times (673.15K - 313.15K)\} \quad (2)$$

(where, $l_{400°C}$ represents length of the test piece at 400°C, and $l_{40°C}$ represents length of the test piece at 40°C)

$$|\alpha_{1000°C} - \alpha_{400°C}| \leq 2.0 \times 10^{-6}/K \quad (3).$$

The reason why such a relation is required in a honeycomb structure of the present invention is as follows. That is, if the layer silicate used as a filler of the bonding material layer in a honeycomb structure has a hydroxyl group in the crystal structure, and, therefore, when temperature is raised, a structural change according to dehydroxylation is caused, and rapid thermal expansion is caused at that time. Therefore, in the case that temperature of a bonding material layer containing such layer silicate as a filler is raised to a temperature where dehydroxylation is caused or more (for example, 800°C or more in the case of using a muscovite as the layer silicate), the thermal expansion difference is caused between the target articles to be bonded, and thereby a breakage in a part of the bonded article or peeling at an interface between the bonding material layer and the target article to be bonded. Therefore, in honeycomb structure of the present invention, the aforementioned relation is required in order to form a bonded material layer where a change of a rapid thermal expansion is suppressed before and after the temperature where the elimination of the hydroxyl group present in the crystal structure of the layer silicate is caused.

As a specific means for making such a relation, the manner that the layer silicate in the bonding material layer is dehydroxylated is employed. The change in thermal expansion behavior of layer silicate is attributed to structural change according to the elimination (i.e., dehydration) of the hydroxyl group. Therefore, by dehydroxylating, rapid change in thermal expansion rate of layer silicate is caused before use. Since layer silicate after the dehydroxylaton shows stable thermal expansion behavior, by obtaining the dehydroxylated layer silicate in the bonding material layer, increase in thermal expansion difference upon rising temperature between the bonding material layer and the target articles is suppressed to improve thermal shock resistance.

As a method for putting the layer silicate in the bonding material layer in a dehydroxylated state, for example, it is possible to use layer silicate previously subjected to a thermal treatment at a temperature of causing dehydroxylation or more upon preparing a bonding material composition for forming a bonding material layer, and it is also possible to unitarily bond target articles to be bonded by means of a bonding material composition applied on bonding faces, followed by a thermal treatment at a temperature where dehydroxylation is caused or more under gradual temperature rise conditions to cause dehydroxylation in the bonding material composition simultaneously with hardening by drying. Incidentally, since the layer silicate having a smaller particle diameter, that is, a larger specific surface area causes dehydroxylation more easily among the same kinds of layer silicates, the layer silicate having a smaller particle diameter is preferable from the viewpoint of easiness in dehydroxylation. On the other hand, the diameter is preferably large for reducing the compression Young's modulus and the tensile Young's modulus in the thickness direction of the bonding material layer.

The thermal treatment temperature for dehydroxylation of the layer silicate is preferably 400°C or more. In particular, in the case that the layer silicate is muscovite, the temperature is preferably 800°C or more. The temperature is preferably 600°C or more in the case of kaolinite, 900°C or more in the case of talc, and 700°C or more in the case of pyrophyllite.

In a honeycomb structure of the present invention, an absorption peak which has a vertex at 3300 to 3800 $cm^{-1}$ and a half width of $350 cm^{-1}$ or less in an infrared absorption spectrum and which is attributed to stretching vibration of a hydroxyl group is preferably a height of less than 30%, more preferably less than 20%, particularly preferably less than 10% of the case that the layer silicate is not dehydroxylated. In the case that the absorption peak is above 30%, it is not preferable because there is a possibility that dehydroxylation is not caused sufficiently enough for suppressing the change in thermal expansion rate.

In a honeycomb structure of the present invention, it is preferable that the bonding material layer contains a filler containing the dehydroxylated layer silicate and an inorganic adhesive as main components. Here, "a filler containing dehydroxylated layer silicate" is a concept including both "a filler of only dehydroxylated layer silicate" and "a filler containing dehydroxylated layer silicate and a filler other than the dehydroxylated layer silicate (e.g., particles described later)". In addition, "contains a filler containing dehydroxylated layer silicate and an inorganic adhesive as main components" means that the amount of the filler containing the dehydroxylated layer silicate and an inorganic adhesive is 55 mass% or more of the whole bonding material layer.

The content of the dehydroxylated layer silicate contained in the bonding material layer is preferably 8 to 37 mass%, more preferably 9 to 36 mass% of the whole bonding material layer after drying. In the case that sufficient dehydroxylation is not caused in the layer silicate, the less the content is, the smaller the change in thermal expansion becomes. However, when the content of the dehydroxylated layer silicate is less than 8 mass% of the whole bonding material layer, the compression Young's modulus and the tensile Young's modulus in the thickness direction of the bonding material layer may become too high. When it is above 37 mass%, there is a possibility that orientation of contraction upon drying or upon a thermal treatment cannot be relaxed, which is not preferable.

Though the particle diameter and the content of the layer silicate contained in the bonding material layer influence on the rapid change of the thermal expansion in the case that sufficient dehydroxylation is not caused, they do not influence on the change in thermal expansion in the case that sufficient dehydroxylation is caused.

The dehydroxylated layer silicate contained in the bonding material layer is preferably any one or more kinds of dehydroxylated layer silicates selected from the group consisting of kaolinite, talc, pyrophyllite, and mica, and particularly preferably muscovite from the viewpoints of the cost or the effect of thermal stress relaxation.

The rate of the inorganic adhesive contained as the matrix in the bonding material layer is preferably 5 to 50 mass%, more preferably 10 to 45 mass% of the whole main components of the bonding material composition from the viewpoints of controlling the compression Young's modulus and the tensile Young's modulus in the thickness direction of the bonding material layer and bonding strength. When the rate of the inorganic adhesive is less than 5 mass% of the whole main composition, it may be impossible to obtain sufficient bonding strength. When the rate is above 50 mass%, the compression Young's modulus and tensile Young's modulus in the thickness direction of the bonding material may become too high.

Specific examples of the material for the inorganic adhesive include colloidal silica (silica sol), colloidal alumina (alumina sol), other various metal oxide sols, ethyl silicate, liquid glass, silica polymer, and aluminum phosphate. It is particularly preferable to use colloidal silica because of excellent adhesion force, compatibility with a filler, chemical stability, thermal resistance, and the like.

It is possible that particles other than dehydroxylated layer silicate are contained in the bonding material layer as a filler. The rate of the particles other than dehydroxylated layer silicate contained in the bonding material layer as a filler is preferably 30 to 70 mass%, more preferably 35 to 65 mass% of the whole main components of the bonding material composition from the viewpoints of controlling the compression Young's modulus and the tensile Young's modulus in the thickness direction of the bonding material layer and bonding strength. When the rate of the particles other than the dehydroxylated layer silicate is less than 30 mass% of the whole main components, sometimes, sufficient bonding strength cannot be obtained. When it is above 70 mass%, the compression Young's modulus and tensile Young's modulus in the thickness direction of the bonding material may become too high.

Specific suitable examples of the particles other than dehydroxylated layer silicate include alumina, silica, mullite, zirconia, silicon carbide, silicon nitride, aluminum nitride, boron nitride, and glass.

In a bonding article of the present invention, it is preferable that, when the dehydroxylated layer silicate included in the bonding material layer is dehydroxylated muscovite, a lattice spacing d calculated out from a peak present in a region of $2\theta = 29$ to $31°$ (CuK$\alpha$) in an XRD diffraction pattern of the bonding material layer satisfies the following formula (4) in a relation with a lattice spacing do in the case that the layer silicate is not dehydroxylated:

$$d - d_0 \geq 0.02 \text{Å} \quad (4)$$

When such a relation is satisfied, a sufficient amount of dehydroxylation for suppressing a change in thermal expansion is caused, which is preferable.

There is no particular limitation on the target article to be bonded constituting a bonded article of the present invention. A suitable example of the target article to be bonded is a ceramic member for obtaining a ceramic structure. A particularly suitable example of the target article to be bonded is a honeycomb segment for obtaining a honeycomb structure. A honeycomb structure obtained by bonding such honeycomb segments is suitably used for, for example, a diesel exhaust gas purification filter, which is exposed to a severe thermal environment upon a regeneration treatment of a filter.

A bonding material composition of the present invention is characterized by a bonding material composition used for forming the bonding material layer upon manufacturing a bonded article obtained by unitarily bonding two or more target articles to be bonded by means of a bonding material layer, wherein the bonding material composition contains dehydroxylated layer silicate, and the average linear thermal expansion coefficient $\alpha_{1000°C}$ specified by the following formula (5) and the average linear thermal expansion coefficient $\alpha_{400°C}$ specified by the following formula (6) of a test piece cut out from the bonding material composition after being dried and hardened satisfy the following formula (7):

$$\alpha_{1000°C} = (l_{1000°C} - l_{40°C}) / \{l_{40°C} \times (1273.15K - 313.15K)\} \quad (5)$$

(where, $l_{1000°C}$ represents length of the test piece at 1000°C, and $l_{40°C}$ represents length of the test piece at 40°C)

$$\alpha_{400°C} = (l_{400°C} - l_{40°C}) / \{l_{40°C} \times (673.15K - 313.15K)\} \quad (6)$$

(where, $l_{400°C}$ represents length of the test piece at 400°C, and $l_{40°C}$ represents length of the test piece at 40°C)

$$|\alpha_{1000°C} - \alpha_{400°C}| \leq 2.0 \times 10^{-6}/K \quad (7).$$

In this bonding material composition, the effect of containing dehydroxylated layer silicate and the reason why it is required to satisfy the above relation are the same as those in the aforementioned bonded article of the present invention. When a bonding material layer is formed by such a bonding material composition upon manufacturing a bonded article, a bonded article of the present invention which has the effect described above and excellent thermal shock resistance can be obtained.

Since a bonding material composition of the present invention is used to form a bonding material layer in the aforementioned honeycomb structure of the present invention, it is preferable to have the same component constitution as the suitable component constitution for the bonding material layer.

That is, a bonding material composition of the present invention contains a filler containing dehydroxylated layer silicate and an inorganic adhesive as main components, and it is possible to contain particles other than dehydroxylated layer silicate as a filler. Suitable materials and amounts of the dehydroxylated layer silicate, inorganic adhesive, and particles other than the dehydroxylated layer silicate used as a filler are as described above.

A method for manufacturing a bonding material composition of the present invention is a method where an organic binder (e.g., methyl cellulose (MC) and carboxymethyl cellulose (CMC)), a dispersant, a pore former (resin balloon), water, and the like are added as necessary to a raw material containing a filler containing dehydroxylated layer silicate and an inorganic adhesive as main components, followed by mixing and kneading by the use of a kneader such as a mixer to obtain a paste. In a present manufacturing method, suitable materials and amounts of the dehydroxylated layer silicate, inorganic adhesive, and particles other than dehydroxylated layer silicate used as a filler are as described above.

A method for manufacturing a honeycomb structure of the present invention is a method where two or more target articles to be bonded are unitarily bonded by the use of a bonding material composition of the present invention. Specifically, a layered article of the target articles to be bonded is manufactured by repeating the steps of applying a bonding material composition of the present invention on outer wall faces of a honeycomb segment to be bonded up to the desired thickness and superposing another honeycomb segment, and pressure is suitably applied to the layered article from outside to bond the whole, followed by drying. In addition, after drying, the outer periphery of the honeycomb structure may be processed as necessary into the desired shape, followed by applying a coating material to the outer peripheral face, then drying again.

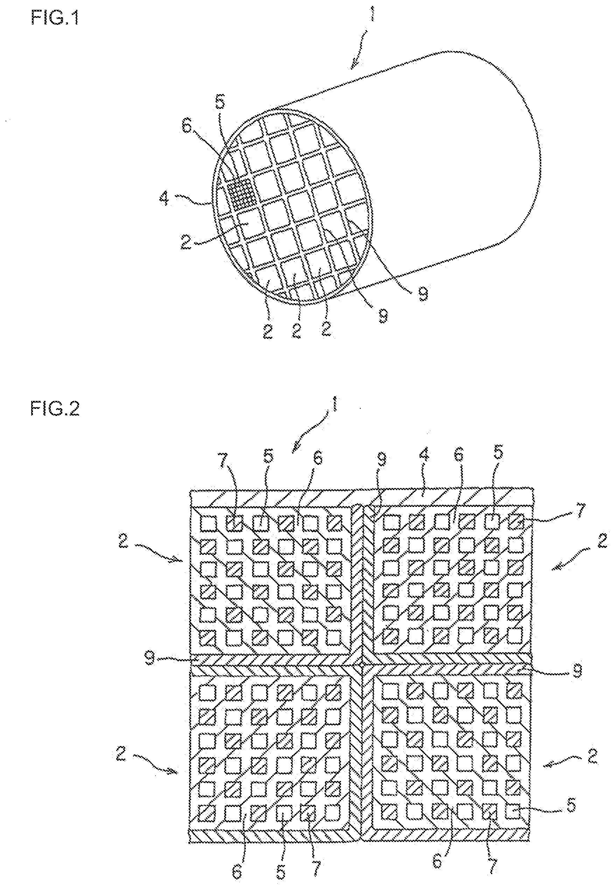

As shown in Figs. 1 and 2, the honeycomb structure 1 is constituted as a honeycomb segment-bonded article obtained by unitarily bonding honeycomb segments 2 having a structure where a plurality of cells 5 separated and formed by porous partition walls 6 and functioning as fluid passages are disposed in parallel with one another in the central axial direction, each honeycomb segment constituting a part of the whole structure and the whole structure by being joined with one another in the direction perpendicular to the central axial direction of the honeycomb structure 1 by means of a bonding material layer 9 formed of a bonding material composition of the present invention.

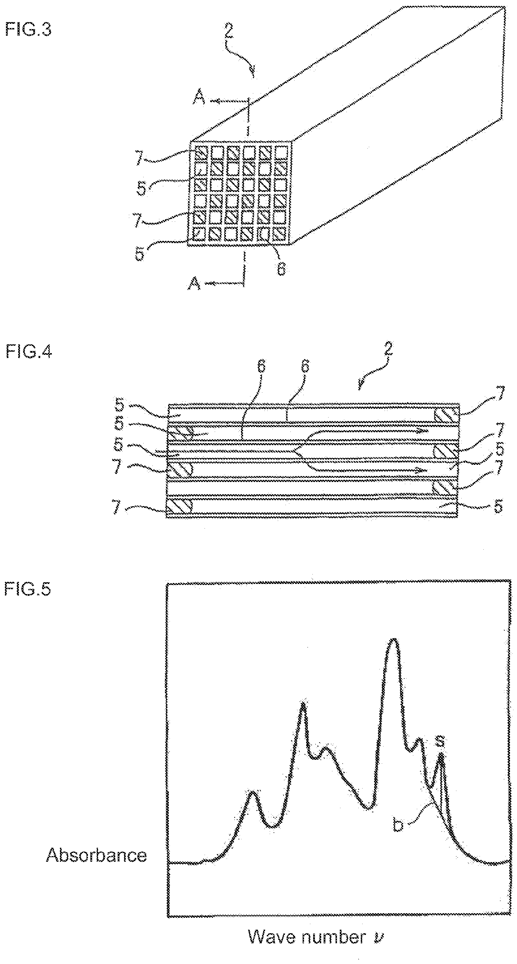

The honeycomb segments 2 unitarily bonded with one another by means of the bonding material layer 9 are subjected to grinding processing after being bonded in such a manner that the cross section of the whole has a shape such as a circle, an ellipse, a triangle, a regular tetragon, or other predetermined shape, and the outer peripheral face is coated by the coating material 4. Incidentally, in the case of using the honeycomb structure 1 as a DPF, as shown in Fig. 3 and Fig. 4, which is a cross-sectional view along the A-A line of Fig. 3, each cell 5 of the honeycomb segments 2 is plugged alternately with a filler 7 on an end portion.

Predetermined cells 5 (inflow cells) are open on the left end portion side in Figs. 3 and 4 and plugged with a filler 7 on the right end portion side, while the other cells 5 (outflow cells) adjacent to the predetermined cells are plugged with the filler 7 on the left end portion side and open on the right end portion side. By such plugging, each end face of the honeycomb segment 2 shows checkerwise pattern as shown in Fig. 2.

Fig. 4 shows a case where the left side of the honeycomb segment 2 serves as an inlet for exhaust gas. Exhaust gas flows into the honeycomb segment 2 from the cells 5 (inflow cells) open without being plugged. The exhaust gas flowing into the cells 5 (inflow cells) passes through the porous partition walls 6 and flows out from the other cells 5 (outflow cells). When the exhaust gas passes through the partition walls 6, particulate matter (particulates) containing soot in exhaust gas is trapped by the partition walls 6. Thus, purification of exhaust gas can be performed. By such trapping, since particulate matter including soot deposites with the passage of time to increase pressure loss, a regeneration treatment for combusting soot and the like is regularly performed. Incidentally, though Figs. 2 to 4 show a honeycomb segment 2 having a square whole cross-sectional shape, the shape may be a triangle, a hexagon, or the like. In addition, the cross-sectional shape of the cells 5 may be a triangle, a hexagon, a circle, an ellipse, or the like.

As shown in Fig. 2, the bonding material layer 9 is formed of a bonding material composition of the present invention and applied on the outer peripheral face of the honeycomb segment 2 to function to bond honeycomb segments 2 with one another. Though the bonding material layer 9 may be applied on the outer peripheral face of each of the adjacent honeycomb segments 2, it may be applied only on one of the corresponding outer peripheral faces of adjacent honeycomb segments 2. The application on only one of the corresponding faces is preferable in that the amount of the bonding material layer 9 can be saved. Though there is no particular limitation on the direction of application of the bonding material layer 9 such as a longitudinal direction in the honeycomb segment outer peripheral face, a direction perpendicular to the longitudinal direction in the honeycomb segment outer peripheral face, and a direction perpendicular to the honeycomb segment outer peripheral face, it is preferably applied toward the longitudinal direction in the honeycomb segment outer peripheral face. The thickness of the bonding material layer 9 is determined in consideration of the bonding force between the honeycomb segments 2 and suitably selected within the range of, for example, 0.5 to 3.0 mm.

Examples of the material for the honeycomb segment 2 used in the present embodiment include a material constituted of at least one kind selected from the group consisting of silicon carbide (SiC), a silicon-silicon carbide based composite material formed with silicon carbide (SiC) as the framework and silicon (Si) as the bonding material, silicon nitride, cordierite, mullite, alumina, spinel, a silicon carbide-cordierite based composite material, lithium aluminum silicate, aluminum titanate, and a Fe-Cr-Al based metal from the viewpoints of strength and thermal resistance. Of these, a material constituted of silicon carbide (SiC) or a silicon-silicon carbide based composite material is preferable.

The honeycomb segment 2 can be manufactured by, for example, adding a binder such as methyl cellulose, hydroxypropoxyl cellulose, hydroxyethyl cellulose, carboxymethyl cellulose, and polyvinyl alcohol, a pore former, a surfactant, water as a solvent, and the like to a material suitably selected from the aforementioned materials to obtain kneaded clay having plasticity and extrusion forming the kneaded clay to have the aforementioned shape, followed by drying with microwaves, hot air, or the like and sintering.

As the filler 7 used for plugging the cells 5, the material used for the honeycomb segment 2 can be used. The plugging by the filler 7 can be performed by immersing an end face of the honeycomb segment 2 in the slurried filler 7 in the state that the cells 5 not to be plugged are masked, to fill the filler 7 into the open cells 5. Though the filling of the filler 7 may be performed before or after firing after forming of the honeycomb segment 2, it is preferably performed before firing because only one firing step is required.

After manufacturing such a honeycomb segment 2, a pasty bonding material composition is applied on the outer peripheral face of the honeycomb segment 2 to form a bonding material layer 9, and a plurality of honeycomb segments 2 are joined to give a predetermined solid shape (whole structure of the honeycomb structure 1), followed by compression in the bonding state and then drying by heating. Thus, a bonded article where a plurality of honeycomb segments 2 is unitarily bonded together is manufactured. Then, the bonded article is subjected to grinding processing to obtain the aforementioned shape, and the outer peripheral face is coated with a coating material 4, followed by drying by heating. Thus, the honeycomb structure 1 shown in Fig. 1 is manufactured. As the material for coating material 4, a material similar to the material for the bonding material layer 9 can be used. The thickness of the coating material 4 is suitably selected within the range of, for example, 0.1 to 1.5 mm.

Example

Hereinbelow, the present invention will be described in more detail on the basis of Examples. However, the present invention is by no means limited to these Examples.

(Manufacturing of honeycomb segment)

A SiC powder and a metal Si powder were mixed at a mass ratio of 80:20, and a pore former, an organic binder, a surfactant, and water are added to the mixture, followed by kneading to manufacture kneaded clay having plasticity. The kneaded clay was subjected to extrusion forming, followed by drying to obtain a honeycomb segment formed article having a partition wall thickness of 310 $\mu$m, a cell density of about 46.5 cells/cm$^2$ (300 cells/inch$^2$), a regular tetragonal cross section having a side of 35 mm, and a length of 152 mm. Then, an end portion of each cell was plugged in such a manner that each of the end faces of the honeycomb segment formed article showed a checkerwise pattern. That is, plugging was performed in such a manner that adjacent cells are plugged in an end portion on mutually opposite sides. As the filler for plugging, a material similar to the material for the honeycomb segment was used. After thus plugging the cells and drying, degreasing was performed at about 400°C in an ambient atmosphere. Then, firing was performed at about 1450°C in an Ar inert atmosphere to obtain a porous honeycomb segment where SiC crystal particles are bonded by Si.

(Preparation of bonding material composition)

As a bonding material composition of Examples 1 to 3 and Comparative Example 1, a pasty bonding material composition was obtained by further mixing, as superaddition, 1.5 mass% of an organic pore former, 0.4 mass% of an organic binder, and 0.04 mass% of a dispersant with a mixture of 41 mass% of SiC fine particles (average particle size of 1.5 $\mu$m), 16.5 mass% of SiC coarse particles (average particle size of 100 $\mu$m), 22 mass% of muscovite (average particle size of 40 $\mu$m), 20 mass% of colloidal silica, and 0.5 mass% of bentonite, adding water to the mixture, and kneading the mixture for 30 minutes by a mixer. The water amount was adjusted in such a manner that the pasty bonding material composition had a viscosity of 20 to 60 Pa·s.

As a bonding material composition of Examples 4 to 6 and Comparative Example 2, a pasty bonding material composition was obtained by further mixing, as superaddition, 1.5 mass% of an organic pore former, 0.4 mass% of an organic binder, and 0.04 mass% of dispersant with a mixture of 41 mass% of SiC fine particles (average particle size of 1.5 $\mu$m), 16.5 mass% of SiC coarse particles (average particle size of 100 $\mu$m), 22 mass% of talc (average particle size of 17 $\mu$m), 20 mass% of colloidal silica, and 0.5 mass% of bentonite, adding water to the mixture, and kneading the mixture for 30 minutes by a mixer. The water amount was adjusted in such a manner that the pasty bonding material composition had a viscosity of 20 to 60 Pa·s.

As a bonding material composition of Examples 7 to 9 and Comparative Example 3, a pasty bonding material composition was obtained by further mixing, as superaddition, 1.5 mass% of an organic pore former, 0.4 mass% of an organic binder, and 0.04 mass% of dispersant with a mixture of 41 mass% of SiC fine particles (average particle size of 100 $\mu$m), 16.5 mass% of SiC coarse particles (average particle size of 1.5 $\mu$m), 22 mass% of kaolinite (average particle size of 4 $\mu$m), 20 mass% of colloidal silica, and 0.5 mass% of bentonite, adding water to the mixture, and kneading the mixture for 30 minutes by a mixer. The water amount was adjusted in such a manner that the pasty bonding material composition had a viscosity of 20 to 60 Pa·s.

As a bonding material composition of Examples 10 to 12 and Comparative Example 4, a pasty bonding material composition was obtained by further mixing, as superaddition, 1.5 mass% of an organic pore former, 0.4 mass% of an organic binder, and 0.04 mass% of dispersant with a mixture of 41 mass% of SiC fine particles (average particle size of 1.5 $\mu$m), 16.5 mass% of SiC coarse particles (average particle size of 100 $\mu$m), 22 mass% of pyrophyllite (average particle size of 10 $\mu$m), 20 mass% of colloidal silica, and 0.5 mass% of bentonite, adding water to the mixture, and kneading the mixture for 30 minutes by a mixer. The water amount was adjusted in such a manner that the pasty bonding material composition had a viscosity of 20 to 60 Pa·s.

As a bonding material composition of Example 13, a pasty bonding material composition was obtained by further mixing, as superaddition, 1.5 mass% of an organic pore former, 0.4 mass% of an organic binder, and 0.04 mass% of dispersant with a mixture of 41 mass% of SiC fine particles (average particle size of 1.5 μm), 16.5 mass% of SiC coarse particles (average particle size of 100 μm), 22 mass% of muscovite subjected to a thermal treatment at 900°C for two hours (average particle size of 40 μm), 20 mass% of colloidal silica, and 0.5 mass% of bentonite, adding water to the mixture, and kneading the mixture for 30 minutes by a mixer. The water amount was adjusted in such a manner that the pasty bonding material composition had a viscosity of 20 to 60 Pa·s. Incidentally, the "average particle size" in this specification in any case is a value measured in accordance with JIS R 1629.

(Manufacturing of honeycomb structure (bonded article))

The step of coating the bonding material composition on the outer wall face of the honeycomb segment with a thickness of about 1 mm along the longitudinal direction of the honeycomb segment to form a bonding material layer and superposing another honeycomb segment were repeated to manufacture a honeycomb segment-layered article having 16 (4 × 4) honeycomb segments in total, pressure was suitably applied from outside to bond the whole together, and drying was performed at 140°C for two hours to obtain a honeycomb segment-bonded article. After the outer periphery of the honeycomb segment-bonded article was cut into a cylindrical shape, the outer peripheral face was coated with a coating material, followed by drying and hardening the bonding material composition and the coating material by a thermal treatment at the temperature shown in Table 1 for 2 hours to obtain a honeycomb structure. Incidentally, as to Example 13, only muscovite was subjected to a thermal treatment at 900°C for 2 hours before a bonding material composition was prepared as described above, and, after a state of a honeycomb bonded article was obtained, it was subjected to a thermal treatment at 700°C for 2 hours.

(Evaluation of honeycomb structure (bonded article) for properties)

With regard to the bonding material layer of each of the honeycomb structures obtained above, the thermal expansion change, peak height, and displacement of lattice spacing were obtained by the following methods. Further, each of the honeycomb structures was subjected to a rapid heating test (burner spalling test) by the following method. The results were shown in Table 1. Incidentally, the displacement of lattice spacing was obtained only for Examples 1 to 3 and 13 and Comparative Example 1, where the bonding material layer contained muscovite.

Thermal expansion change:
A test piece of 15 mm × 3 mm × 1 mm was cut out (cutting direction of 15 mm was a longitudinal direction of the honeycomb structure) from the bonding material layer of the honeycomb structure, and the length $l_{40°C}$ of the test piece at 40°C, the length $l_{400°C}$ of the test piece at 400°C, and the length $l_{1000°C}$ of the test piece at 1000°C were measured at a temperature rise rate of 10°C/min. and according to JIS R 1618 for the other measurement conditions and the apparatus. From the measurement values, the average linear thermal expansion coefficient $\alpha_{1000°C}$ specified by the described formula (1) and the average linear thermal expansion coefficient $\alpha_{400°C}$ specified by the described formula (2) were obtained. From the values, the value of $|\alpha_{1000°C} - \alpha_{400°C}|$ was calculated and shown in Table by the following criteria.

Good: $|\alpha_{1000°C} - \alpha_{400°C}| \leq 1.0 \times 10^{-6} / K$
Fair: $1.0 \times 10^{-6} / K < |\alpha_{1000°C} - \alpha_{400°C}| \leq 2.0 \times 10^{-6} / K$
Bad: $2.0 \times 10^{-6} / K < |\alpha_{1000°C} - \alpha_{400°C}|$

Peak height:
A powder obtained by pulverizing a bonding material layer of the honeycomb structure cut out into an arbitral shape was mixed with a KBr powder so as to have the total amount of 5 mass% to obtain a sample for mesurement, and an infrared absorption spectrum was obtained by FT-IR. In the infrared absorption spectrum, the peak height of absorption spectrum of a hydroxyl group having a vertex at 3300 to 3800 cm$^{-1}$ and a half width of 350cm$^{-1}$ or less was obtained, and the ratio of the peak height when the peak height in the case that layer silicate in the bonding material layer is not dehydroxylated was regarded as 100% was obtained. Incidentally, a diffuse reflection method was employed for the measurement, and Spectrum 2000 (trade name) of Perkin Elmer Japan Co., Ltd., was used as the measurement apparatus. In addition, when the peak height was calculated, as shown in Fig. 5, the base line b with respect to the objective peak s was taken.
Displacement of lattice spacing:
An XRD pattern was measured by the use of the powder obtained by pulverizing a bonding material layer cut out into an arbitral shape of the honeycomb structure as the measurement sample, and the lattice spacing d was calculated from the peak detected in a region of $2\theta$ = 29 to 31° (CuK$\alpha$) (diffraction peak in (025) face according to the ICDD card (#06-0263) of Muscovite-2M1). In addition, the lattice spacing do in the case that the layer silicate (muscovite) in the bonding material layer is not subjected to a dehydroxylation treatment (thermal treatment) was calculated in the same manner to obtain displacement $\Delta$d by the following formula (8). Incidentally, a monochromator method was used for the measurement, and RINT-2500 (trade name) of Rigaku Corporation was used as the measurement apparatus. As the measurement conditions, there were employed an X-ray tube voltage of 50 kV, a tube current of 300 mA, a step of 0.01°, and a measurement time of 1.5°/min.

$$\Delta d = d - d_0 \quad (8)$$

Burner spalling test (rapid-heating test):
A temperature difference was formed between the central portion and the outside portion by allowing the air heated at 1000°C and 1100°C by a burner to flow into the honeycomb structure, and presence/absence of damage generation in the honeycomb structure was checked for evaluation with the following criteria.

Good: Neither breakage in honeycomb structure nor peeling at the interface between the bonding material layer and the honeycomb segment
Fair: Breakage in honeycomb structure and/or peeling at the interface between the bonding material layer and the honeycomb segment at one or two places.
Bad: Breakage in honeycomb structure and/or peeling at the interface between the bonding material layer and the honeycomb segment at three or more places.

[Table 1]

| | Layer silicate | Inorganic adhesive | Thermal treatment temperature (°C) | Thermal expansion Change $|\alpha_{1000°C}-\alpha_{400°C}|$ | Peak height (%) | Displacement $\Delta d$ (Å) | Rapid heating test 1000°C | 1100°C |
|---|---|---|---|---|---|---|---|---|
| Example 1 | Muscovite | Colloidal silica | 800 | Fair | 20 | 0.030 | Good | Fair |
| Example 2 | Muscovite | Colloidal silica | 900 | Good | 3.5 | 0.033 | Good | Good |
| Example 3 | Muscovite | Colloidal silica | 1000 | Good | 0 | 0.037 | Good | Good |
| Example 4 | Talc | Colloidal silica | 900 | Fair | 17 | - | Fair | Fair |
| Example 5 | Talc | Colloidal silica | 1000 | Good | 1.5 | - | Good | Good |
| Example 6 | Talc | Colloidal silica | 1100 | Good | 0 | - | Good | Good |
| Example 7 | Kaolinite | Colloidal silica | 600 | Fair | 25 | - | Fair | Fair |
| Example 8 | Kaolinite | Colloidal silica | 700 | Good | 0 | - | Good | Good |
| Example 9 | Kaolinite | Colloidal silica | 800 | Good | 0 | - | Good | Good |
| Example 10 | Pyrophyllite | Colloidal silica | 700 | Fair | 23 | - | Fair | Fair |
| Example 11 | Pyrophyllite | Colloidal silica | 800 | Good | 2 | - | Good | Good |
| Example 12 | Pyrophyllite | Colloidal silica | 900 | Good | 0 | - | Good | Good |
| Example 13 | Muscovite | Colloidal silica | 900/700 | Good | 0 | 0.034 | Good | Good |
| Comp. Ex. 1 | Muscovite | Colloidal silica | 700 | Bad | 50 | 0.003 | Fair | Bad |

| | Layer silicate | Inorganic adhesive | Thermal treatment temperature (°C) | Thermal expansion Change $\lvert\alpha_{1000°C}-\alpha_{400°C}\rvert$ | Peak height (%) | Displacement $\Delta d$ (Å) | Rapid heating test | |
|---|---|---|---|---|---|---|---|---|
| | | | | | | | 1000°C | 1100°C |
| Comp. Ex. 2 | Talc | Colloidal silica | 800 | Bad | 63 | - | Bad | Bad |
| Comp. Ex. 3 | Kaolinite | Colloidal silica | 500 | Bad | 52 | - | Bad | Bad |
| Comp. Ex. 4 | Pyrophyllite | Colloidal silica | 600 | Bad | 56 | - | Bad | Bad |

EP 2 133 198 B1

As shown in Table 1, Examples 1 to 13, where the bonding material layer contains layer silicate and which satisfy $|\alpha_{1000°C} - \alpha_{400°C}| \leq 2.0 \times 10^{-6}/K$, showed good results of the rapid heating test, and it was confirmed that they had excellent thermal shock resistance in comparison with Comparative Examples 1 to 4, where $2.0 \times 10^{-6}/K < |\alpha_{1000°C} - \alpha_{400°C}|$.

Industrial Applicability

The present invention can suitably be used for a bonded article obtained by unitarily bonding a plurality of target articles to be bonded, for example, a honeycomb structure used for a DPF or the like and obtained by unitarily bonding a plurality of honeycomb segments.

**Claims**

1. A honeycomb structure obtained by unitarily bonding two or more honeycomb segments to be bonded by means of a bonding material layer, wherein the bonding material layer contains dehydroxylated layer silicate, and the average linear thermal expansion coefficient $\alpha_{1000°C}$ specified by the following formula (1) and the average linear thermal expansion coefficient $\alpha_{400°C}$ specified by the following formula (2) of a test piece cut out from the bonding material layer satisfy the following formula (3):

$$\alpha_{1000°C} = (l_{1000°C} - l_{40°C}) / \{l_{40°C} \times (1273.15K - 313.15K)\} \quad (1)$$

(where, $l_{1000°C}$ represents length of the test piece at 1000°C, and $l_{40°C}$ represents length of the test piece at 40°C)

$$\alpha_{400°C} = (l_{400°C} - l_{40°C}) / \{l_{40°C} \times (673.15K - 313.15K)\} \quad (2)$$

(where, $l_{400°C}$ represents length of the test piece at 400°C, and $l_{40°C}$ represents length of the test piece at 40°C)

$$| \alpha_{1000°C} - \alpha_{400°C} | \leq 2.0 \times 10^{-6}/K \quad (3),$$

wherein the thermal expansion is measured according to the method disclosed in the description.

2. A honeycomb structure according to Claim 1, wherein a content of the layer silicate contained in the bonding material layer is 8 to 37 mass% of the whole bonding material layer.

3. A honeycomb structure according to Claim 1 or 2,
wherein an absorption peak which has a vertex at 3300 to 3800 $cm^{-1}$ and a half width of 350$cm^{-1}$ or less in an infrared absorption spectrum and which is attributed to stretching vibration of a hydroxyl group has a height of 30% or less of the case that the layer silicate is not dehydroxylated.

4. A honeycomb structure according to any one of Claims 1 to 3, wherein the layer silicate is layer silicate of any one or more kinds selected from the group consisting of kaolinite, talc, pyrophyllite, and mica.

5. A honeycomb structure according to any one of Claims 1 to 3, wherein the layer silicate is muscovite.

6. A honeycomb structure according to any one of Claims 1 to 3, wherein the layer silicate is dehydroxylated muscovite, and a lattice spacing d calculated out from a peak present in a region of $2\theta = 29$ to $31°(CuK_\alpha)$ in an XRD diffraction pattern of the bonding material layer satisfies the following formula (4) in a relation with a lattice spacing $d_0$ in the case that the layer silicate is not dehydroxylated:

$$d - d_0 \geq 0.02Å \quad (4)$$

7. Use of a honeycomb structure according to any one of Claims 1 to 6 for a diesel exhaust gas purification filter.

8. A bonding material composition containing a filler containing dehydroxylated layer silicate and an inorganic adhesive as main compounds, used for forming a bonding material layer upon manufacturing honeycomb structure obtained by unitarily bonding two or more honeycomb segments to be bonded by means of the bonding material layer, wherein the average linear thermal expansion coefficient $\alpha_{1000°C}$ specified by the following formula (5) and the average linear thermal expansion coefficient $\alpha_{400°C}$ specified by the following formula (6) of a test piece cut out from the bonding material composition after being dried and hardened satisfy the following formula (7):

$$\alpha_{1000°C} = (l_{1000°C} - l_{40°C}) / \{l_{40°C} \times (1273.15K - 313.15K)\} \quad (5)$$

(where, $l_{1000°C}$ represents length of the test piece at 1000°C, and $l_{40°C}$ represents length of the test piece at 40°C)

$$\alpha_{400°C} = (l_{400°C} - l_{40°C}) / \{l_{40°C} \times (673.15K - 313.15K)\} \quad (6)$$

(where, $l_{400°C}$ represents length of the test piece at 400°C, and $l_{40°C}$ represents length of the test piece at 40°C)

$$| \alpha_{1000°C} - \alpha_{400°C} | \leq 2.0 \times 10{-6} / K \quad (7),$$

wherein the thermal expansion is measured according to the method disclosed in the description.

9. A bonding material composition according to Claim 8, wherein the layer silicate is layer silicate of any one or more kinds selected from the group consisting of kaolinite, talc, pyrophyllite, and mica.

10. A bonding material composition according to Claim 8, wherein the layer silicate is muscovite.

11. A method for manufacturing the bonding material composition according to claim 8, wherein a raw material containing a filler containing dehydroxylated layer silicate and an inorganic adhesive as main components is mixed and kneaded to obtain paste.

12. A method for manufacturing a bonding material composition according to Claim 11, wherein the layer silicate is muscovite and dehydroxylated by a thermal treatment at 800°C or more.

13. A method for manufacturing a honeycomb structure obtained by unitarily bonding two or more honeycomb segments to be bonded by the use of a bonding material composition according to any one of Claims 8 to 10.

**Patentansprüche**

1. Wabenstruktur, erhalten durch einheitliches Verbinden von zwei oder mehr zu verbindenden Wabensegmenten mit Hilfe einer Bindematerialschicht, wobei die Bindematerialschicht dehydroxyliertes Schichtsilicat enthält und der durchschnittliche lineare Wärmeausdehnungskoeffizient $\alpha_{1000 °C}$, spezifiziert durch die folgende Formel (1), und der durchschnittliche lineare Wärmeausdehnungskoeffizient $\alpha_{400 °C}$, spezifiziert durch die folgende Formel (2), eines Teststückes, das aus der Bindematerialschicht herausgeschnitten wurde, die folgende Formel (3) erfüllen:

$$\alpha_{1000 °C} = (l_{1000 °C} - l_{40 °C}) / \{l_{40 °C} \times (1273,15K - 313,15K)\} \quad (1)$$

(wobei $l_{1000 °C}$ die Länge des Teststückes bei 1.000 °C darstellt und $l_{40 °C}$ die Länge des Teststückes bei 40 °C darstellt)

$$\alpha_{400 °C} = (l_{400 °C} - l_{40 °C}) / \{l_{40 °C} \times (673,15K - 313,15K)\} \quad (2)$$

(wobei $l_{400 °C}$ die Länge des Teststückes bei 400 °C darstellt und $l_{40 °C}$ die Länge des Teststückes bei 40 °C darstellt)

$$\left| \alpha_{1000\,°C} - \alpha_{400\,°C} \right| \leq 2{,}0 \times 10^{-6}/K \qquad (3),$$

wobei die Wärmeausdehnung gemäß dem in der Beschreibung offenbarten Verfahren gemessen wird.

2. Wabenstruktur nach Anspruch 1, wobei der Gehalt an dem Schichtsilicat, das in der Bindematerialschicht enthalten ist, 8 bis 37 Masse-% der gesamten Bindematerialschicht beträgt.

3. Wabenstruktur nach Anspruch 1 oder 2, wobei ein Absorptionspeak, der einen Scheitelpunkt bei 3.300 bis 3.800 $cm^{-1}$ und eine Halbwertsbreite von 350 $cm^{-1}$ oder weniger in einem Infrarotabsorptionsspektrum hat und der Streckschwingung einer Hydroxylgruppe zuzuschreiben ist, eine Höhe von 30 % oder weniger hat, wenn das Schichtsilicat nicht dehydroxyliert ist.

4. Wabenstruktur nach einem der Ansprüche 1 bis 3, wobei das Schichtsilicat Schichtsilicat von einer oder mehreren Arten, ausgewählt aus der Gruppe, bestehend aus Kaolinit, Talk, Pyrophyllit und Glimmer ist.

5. Wabenstruktur nach einem der Ansprüche 1 bis 3, wobei das Schichtsilicat Muskovit ist.

6. Wabenstruktur nach einem der Ansprüche 1 bis 3, wobei das Schichtsilicat dehydroxyliertes Muskovit ist und ein Gitterabstand d, berechnet aus einem Peak, der in einer Region von $2\theta = 29$ bis $31°(CuK\alpha)$ in einem XRD-Beugungsmuster der Bindematerialschicht vorliegt, die folgende Formel (4) in einer Beziehung mit einem Gitterabstand $d_0$ erfüllt, wenn das Schichtsilicat nicht dehydroxyliert ist:

$$d - d_0 \geq 0{,}02 \text{ Å} \qquad (4)$$

7. Verwendung einer Wabenstruktur nach einem der Ansprüche 1 bis 6 für einen Dieselabgasreinigungsfilter.

8. Bindematerialzusammensetzung, enthaltend einen Füllstoff, enthaltend dehydroxyliertes Schichtsilicat, und ein anorganisches Haftmittel als Hauptverbindungen, die zum Bilden einer Bindematerialschicht nach der Herstellung einer Wabenstruktur, erhalten durch einheitliches Verbinden von zwei oder mehr Wabensegmenten, die mittels der Bindematerialschicht zu verbinden sind, verwendet wird, wobei der durchschnittliche lineare Wärmeausdehnungskoeffizient $\alpha_{1000\,°C}$, spezifiziert durch die folgende Formel (5), und der durchschnittliche lineare Wärmeausdehnungskoeffizient $\alpha_{400\,°C}$, spezifiziert durch die folgende Formel (6), eines Teststückes, das aus der Bindematerialzusammensetzung, nachdem diese getrocknet und gehärtet worden ist, herausgeschnitten wurde, die folgende Formel (7) erfüllen:

$$\alpha_{1000\,°C} = (l_{1000\,°C} - l_{40\,°C}) / \{l_{40\,°C} \times (1273{,}15K - 313{,}15K)\} \qquad (5)$$

(wobei $l_{1000\,°C}$ die Länge des Teststückes bei 1.000 °C darstellt und $l_{40\,°C}$ die Länge des Teststückes bei 40 °C darstellt)

$$\alpha_{400\,°C} = (l_{400\,°C} - l_{40\,°C}) / \{l_{40\,°C} \times (673{,}15K - 313{,}15K)\} \qquad (6)$$

(wobei $l_{400\,°C}$ die Länge des Teststückes bei 400 °C darstellt und $l_{40\,°C}$ die Länge des Teststückes bei 40 °C darstellt

$$\left| \alpha_{1000\,°C} - \alpha_{400\,°C} \right| \leq 2{,}0 \times 10^{-6}/K \qquad (7),$$

wobei die Wärmeausdehnung gemäß dem in der Beschreibung offenbarten Verfahren gemessen wird.

9. Bindematerialzusammensetzung nach Anspruch 8, wobei das Schichtsilicat Schichtsilicat von einer oder mehreren Arten, ausgewählt aus der Gruppe, bestehend aus Kaolinit, Talk, Pyrophyllit und Glimmer ist.

10. Bindematerialzusammensetzung nach Anspruch 8, wobei das Schichtsilicat Muskovit ist.

**11.** Verfahren zur Herstellung der Bindematerialzusammensetzung nach Anspruch 8, wobei ein Rohmaterial, enthaltend einen Füllstoff, enthaltend dehydroxyliertes Schichtsilicat, und ein anorganisches Haftmittel als Hauptkomponenten, unter Erhalt einer Paste gemischt und geknetet wird.

**12.** Verfahren zur Herstellung einer Bindematerialzusammensetzung nach Anspruch 11, wobei das Schichtsilicat Muskovit ist und durch eine Wärmebehandlung bei 800 °C oder mehr dehydroxyliert wird.

**13.** Verfahren zur Herstellung einer Wabenstruktur, erhalten durch einheitliches Verbinden von zwei oder mehr zu verbindenden Wabensegmenten unter Verwendung einer Bindematerialzusammensetzung nach einem der Ansprüche 8 bis 10.

**Revendications**

**1.** Structure en nid d'abeilles obtenue par liaison unitaire de deux ou plusieurs segments de nid d'abeilles à lier au moyen d'une couche de matériau de liaison, dans laquelle la couche de matériau de liaison contient un silicate stratifié déshydroxylé, et le coefficient moyen de dilatation thermique linéaire $\alpha_{1000°C}$ spécifié par la formule (1) suivante et le coefficient moyen de dilatation thermique linéaire $\alpha_{400°C}$ spécifié par la formule (2) suivante d'un échantillon découpé dans la couche de matériau de liaison satisfont à la formule (3) suivante :

$$\alpha_{1000°C} = (l_{1000°C} - l_{40°C}) / \{l_{40°C} \times (1273,15K - 313,15K)\} \ (1)$$

(où, $l_{1000°C}$ représente la longueur de l'échantillon à 1000 °C, et $l_{40°C}$ représente la longueur de l'échantillon à 40 °C)

$$\alpha_{400°C} = (l_{400°C} - l_{40°C}) / \{l_{40°C} \times (673,15K - 313,15K)\} \ (2)$$

(où $l_{400°C}$ représente la longueur de l'échantillon à 400 °C, et $l_{40°C}$ représente la longueur de l'échantillon à 40°C)

$$\left| \alpha_{1000°C} - \alpha_{400°C} \right| \leq 2,0 \times 10^{-6}/K \ (3),$$

où la dilatation thermique est mesurée selon le procédé décrit dans la description.

**2.** Structure en nid d'abeilles selon la revendication 1, dans laquelle la teneur en silicate stratifié contenu dans la couche de matériau de liaison est de 8 à 37 % en masse de la couche de matériau de liaison entière.

**3.** Structure en nid d'abeilles selon la revendication 1 ou 2, dans laquelle un pic d'absorption qui a un sommet entre 3300 et 3800 cm$^{-1}$ et une largeur de 350 cm$^{-1}$ ou moins dans un spectre d'absorption infrarouge et qui est attribué à la vibration d'étirement d'un groupe hydroxyle a une hauteur de 30 % ou moins dans le cas où le silicate stratifié n'est pas déshydroxylé.

**4.** Structure en nid d'abeilles selon l'une quelconque des revendications 1 à 3, dans laquelle le silicate stratifié est un silicate stratifié d'un ou plusieurs types choisis dans le groupe constitué de kaolinite, talc, pyrophyllite et mica.

**5.** Structure en nid d'abeilles selon l'une quelconque des revendications 1 à 3, dans laquelle le silicate stratifié est de la muscovite.

**6.** Structure en nid d'abeilles selon l'une quelconque des revendications 1 à 3, dans laquelle le silicate stratifié est de la muscovite déshydroxylée, et un espacement de réseau d calculé à partir d'un pic présent dans une région de $2\theta$ = 29 à 31° (CuK$_\alpha$) dans un diagramme de diffraction XRD de la couche de matériau de liaison satisfait la formule (4) suivante en relation avec un espacement de réseau do dans le cas où le silicate stratifié n'est pas déshydroxylé :

$$d-d_0 \geq 0,02\text{Å} \ (4)$$

7. Utilisation d'une structure en nid d'abeilles selon l'une quelconque des revendications 1 à 6 pour un filtre de purification de gaz d'échappement diesel.

8. Composition de matériau de liaison contenant une charge contenant un silicate stratifié déshydroxylé et un adhésif inorganique comme composés principaux, utilisée pour former une couche de matériau de liaison lors de la fabrication d'une structure en nid d'abeilles obtenue par liaison unitaire de deux ou plusieurs segments de nid d'abeilles à lier au moyen de la couche de matériau de liaison, dans laquelle le coefficient moyen de dilatation thermique linéaire $\alpha_{1000°C}$ spécifié par la formule (5) suivante et le coefficient moyen de dilatation thermique linéaire $\alpha_{400°C}$ spécifié par la formule (6) suivante d'un échantillon découpé dans la composition de matériau de liaison après avoir été séchée et durcie satisfont à la formule (7) suivante :

$$\alpha_{1000°C} = (l_{1000°C} - l_{40°C}) / \{l_{40°C} \times (1273,15K - 313,15K)\}\ (5)$$

(où $l_{1000°C}$ représente la longueur de l'échantillon à 1000 °C, et $l_{40°C}$ représente la longueur de l'échantillon à 40 °C)

$$\alpha_{400°C} = (l_{400°C} - l_{40°C}) / \{l_{40°C} \times (673,15K - 313,15K)\}\ (6)$$

(où, $l_{400°C}$ représente la longueur de l'échantillon à 400°C, et $l_{40°C}$ représente la longueur de l'échantillon à 40 °C)

$$\left| \alpha_{1000°C} - \alpha_{400°C} \right| \leq 2,0 \times 10^{-6}\ /K\ (7),$$

où la dilatation thermique est mesurée selon le procédé décrit dans la description.

9. Composition de matériau de liaison selon la revendication 8, dans laquelle le silicate stratifié est un silicate stratifié d'un ou plusieurs types quelconques choisis dans le groupe constitué de kaolinite, talc, pyrophyllite et mica.

10. Composition de matériau de liaison selon la revendication 8, dans laquelle le silicate stratifié est de la muscovite.

11. Procédé de fabrication de la composition de matériau de liaison selon la revendication 8, dans lequel une matière première contenant une charge contenant un silicate stratifié déshydroxylé et un adhésif inorganique comme composants principaux est mélangée et malaxée pour obtenir une pâte.

12. Procédé de fabrication d'une composition de matériau de liaison selon la revendication 11, dans lequel le silicate stratifié est de la muscovite et déshydroxylé par un traitement thermique à 800 °C ou plus.

13. Procédé de fabrication d'une structure en nid d'abeilles obtenue par liaison unitaire de deux ou plusieurs segments de nid d'abeilles à lier par l'utilisation d'une composition de matériau de liaison selon l'une quelconque des revendications 8 à 10.

FIG.1

FIG.2

FIG.3

FIG.4

FIG.5

Absorbance

Wave number $\nu$

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002177719 A
- EP 0880184 A
- EP 0624462 A
- US 3106503 A
- JP 60161713 B
- JP 06024867 B